# EUROPEAN PATENT SPECIFICATION

(11) **EP 2 518 939 B1**
(45) Date of publication and mention of the grant of the patent: **12.09.2018**
(21) Application number: 10854931.2
(22) Date of filing: 08.11.2010
(51) Int. Cl.: H04L 12/24

(54) **DATA ACQUISITION METHOD IN NETWORK RESOURCE ESTIMATION AND SYSTEM THEREOF**
DATENERFASSUNGSVERFAHREN BEI DER NETZWERKRESSOURCENSCHÄTZUNG SOWIE SYSTEM DAFÜR
PROCÉDÉ D'ACQUISITION DE DONNÉES EMPLOYÉ POUR ESTIMER DES RESSOURCES RÉSEAU ET SYSTÈME CORRESPONDANT

(30) Priority: 20.07.2010 CN 201010233551
(43) Date of publication of application: 31.10.2012
(73) Proprietor: ZTE Corporation, Shenzhen, Guangdong 518057 (CN)
(72) Inventor: FU, Yi, Shenzhen Guangdong 518057 (CN); WANG, Xuehuai, Shenzhen Guangdong 518057 (CN); ZHANG, Lei, Shenzhen Guangdong 518057 (CN)
(74) Representative: RGTH
(86) International application number: PCT/CN2010/078523
(87) International publication number: WO 2012/009901

(56) References cited:
- CN-A- 1 547 721
- CN-A- 101 576 882
- US-A1- 2005 050 013
- AIKO PRAS ET AL: "Comparing the performance of SNMP and Web services-based management", IEEE TRANSACTIONS ON NETWORK AND SERVICE MANAGEMENT, IEEE, US, vol. 1, no. 2, 1 December 2004 (2004-12-01), pages 72-82, XP011253097, ISSN: 1932-4537
- CHEIKHROUHOU M ET AL: "An Efficient Polling Layer for SNMP", 20000410; 20000410 - 20000414, 10 April 2000 (2000-04-10), pages 477-490, XP010376703,

## Description

### TECHNICAL FIELD

The present disclosure relates to a network resource estimation technology in the field of communications, and in particular to a data acquisition method and system in network resource estimation.

### BACKGROUND

With the rapid development of a communication technology, the scale and capacity of a communication network is getting larger and larger, the types of network resources become more and more, and the difficulty in maintaining the network increases as well. An existing network resource estimation method is mostly as follows: acquiring data through a network manager, then making estimation checking and statistical analysis on the acquired data in a manual way or the like. The network resource estimation method has great workload and low efficiency, and is error-prone during statistics. Therefore, it is very urgent to construct an automatic intelligent network resource estimation system to check the status of current network resources.

At present, the network resource estimation mainly focuses on status data of network resource dynamic operating, static data analysis, analysis on a network hidden danger, or the like. The check range comprises: the current network health condition and a network resource condition within a certain historical cycle, or the like.

Usually, in the process of making estimation checking on the current network resource condition, it is necessary to guarantee two goals: (1) the network resource estimation system should enable to evaluate and analyze the network resource condition timely, comprehensively and accurately; (2) the network resource estimation system should have higher work efficiency, and reduce the influence on the network resources as much as possible. In order to guarantee the achievement of the two goals, the key to finish the work is to design a reasonable data acquisition way.

There are mainly two data acquisition ways adopted by the existing network resource estimation system as follows:
1) the network resource estimation system directly connects to network element equipment to acquire operating data of the network element equipment through an interface on the network element equipment side;
2) an estimation checking function is integrated into a network manager, and the operating data of the network element equipment are acquired by transmitting commands to the network element equipment through the network manager.

In the first way above, since the network resource estimation system directly interacts with the network element equipment, it is easy to influence the operation of the network element equipment, thereby influencing the operation and management of the existing network. Moreover, since there is a difference between network element equipment, the network resource estimation system needs to configure interfaces of different versions for different network element equipment respectively, which increases the workload and difficulty of development.

In the second way, although difficulty in developing the network resource estimation system is reduced in comparison with the first way, the range of the network resource estimation is limited to the range of a single network manager management, and resource information acquired is not very comprehensive. Additionally, the network resource estimation system has bad portability, and is limited to a certain type of network managers, so different network resource estimation systems have to be reconfigured for different types of network managers.

According to US2005/050013 A1, a policy-driven system and method are provided for querying devices. The method comprises: accepting a query, from a client, directed to a device; selecting a query policy; and, sending the query to an agent using a method responsive to the selected query policy. The queries may concern a device communication port information, network information, communication checks (Ping), capability requests, or status updates. The methods may include spooler API, simple network management protocol (SNMP), printer database, proprietary protocol, Windows 2K directory service, service location protocol (SLP), and HTTP embedded device web page queries. The method further comprises: receiving a query result from the agent; and, sending the query result to the client using a method responsive to the selected query policy. In some aspects, an additional step merges a plurality of query results in response to the selected query policy. Then, the merged query result is sent to the client.

According to AIKO PRAS ET AL: "Comparing the Performance of SNMP and Web Services-Based Management", IEEE TRANSACTIONS ON NETWORK AND SERVICE MANAGEMENT, IEEE, US, vol. 1, no. 2, 1 December 2004 (2004-12-01), pages 72-82, XP011253097, ISSN: 1932-4537, performance of Web services based network monitoring is compared to traditional, SNMP based, monitoring. The study focuses on the ifTable, and investigates performance as function of the number of retrieved objects. The following aspects are examined: bandwidth usage, CPU time, memory consumption and round trip delay. Several prototypes of Web services based agents were implemented; these prototypes can retrieve single if Table elements, ifTable rows, ifTable columns or the entire ifTable. A generic formula is presented to calculate SNMP's bandwidth requirements; the bandwidth consumption of the prototypes was compared to that formula. The CPU time, memory consumption and round trip delay of the prototypes was compared to NetSNMP, as well as several other SNMP agents. Measurements show that SNMP is more efficient in cases where only a single object is retrieved; for larger number of objects Web services may be more efficient. If performance is the issue, the choice between BER (SNMP) or XML (Web services) encoding is generally not the determining factor; other choices can have stronger impact on performance.

### SUMMARY

Accordingly, the main objective of the present disclosure is to provide a data acquisition method and system in network resource estimation. The method and the system can efficiently acquire data required in network resource estimation, reduce the influence on network operation and management in the process of acquiring the data, and reduce the difficulty in developing a network resource estimation system.

The features of the method and system according to the present disclosure are defined in the independent claims, and the preferable features according to the present invention are defined in the dependent claims.

In the data acquisition method and system in network resource estimation provided by the present disclosure, when querying data, a network resource estimation system reads a configured rule file, sets a query command according to a query rule of to-be-queried data which is set in the rule file, and transmits the query command to a network manager; and the network manager queries the data through an interface of the network manager itself corresponding to the query command according to the received query command, and returns a query result to the network resource estimation system. In the present disclosure, in order to improve the data acquisition efficiency, a corresponding data query rule is set in the rule file; when querying data, a corresponding query command is set according to the query rule, and a network manager is notified to perform data query operation through a corresponding interface. Therefore, it is possible to improve the data acquisition efficiency of the network resource estimation system.

Furthermore, as the network resource estimation system of the present disclosure is independent from a network manager, it is only needed to configure corresponding network management adapters for different network managers, therefore, the network resource estimation system has low development difficulty and great applicability, and can acquire data of network element equipment managed by different types of network managers. Meanwhile, the network resource estimation system of the present disclosure realizes the data acquisition of the network element equipment through the network manager, that is, the network resource estimation system is not in direct connection with the network element equipment, therefore, the influence on the operation and management of an existing network does not occur, and it is unnecessary to configure interfaces communicating with the network resource estimation system for the network element equipment. In comparison with the related art, the present disclosure is featured by small development workload and simple implementation method.

### BRIEF DESCRIPTION OF THE DRAWINGS

Fig. 1 is a flowchart diagram illustrating implementation of a data acquisition method in network resource estimation according to the present disclosure;
Fig. 2 is a flowchart diagram illustrating implementation of a method of setting a query command according to a query rule which is set in a rule file according to the present disclosure;
Fig. 3 is a structure diagram illustrating arrangement of a network resource estimation system in an multiple-network-manager environment according to the present disclosure; and
Fig. 4 is a structure diagram illustrating a data acquisition system in network resource estimation according to the present disclosure.

### DETAILED DESCRIPTION

The fundamental idea of the present disclosure is that: when querying data, a network resource estimation system reads a configured rule file, sets a query command according to a query rule of to-be-queried data which is set in the rule file, and transmits the query command to a network manager; and the network manager queries the data through an interface of the network manager itself corresponding to the query command according to the received query command, and returns a query result to the network resource estimation system.

Further, the network resource estimation system can analyze the received data, store an analysis result; and it may generate estimation report forms according to the analysis result.

Within the network resource estimation system of the present disclosure, an estimation checking unit and a data acquisition unit required during data acquisition are configured, as well as a network management adapter corresponding to the network manager. The network resource estimation system communicates with corresponding network managers through each network management adapter.

The present disclosure will be further described in detail below in conjunction with the accompany drawings and specific embodiments.

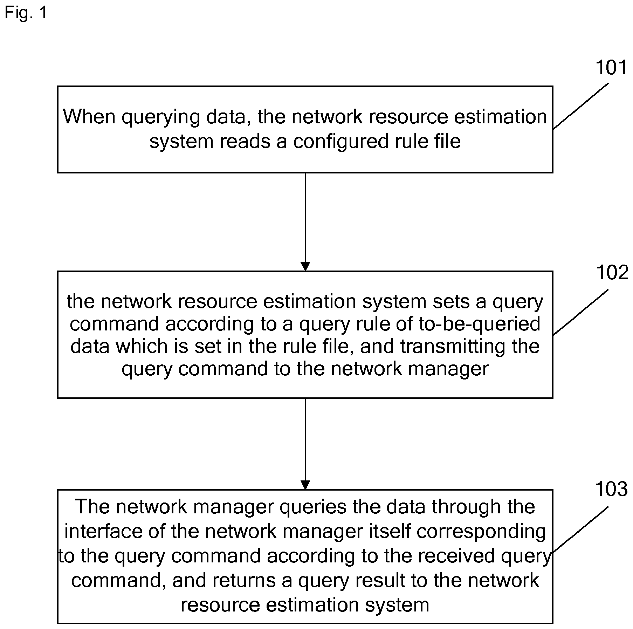

Fig. 1 is a flowchart diagram illustrating implementation of a data acquisition method in network resource estimation according to the present disclosure, as shown in Fig. 1, the implementation process of the method is as follows.

Step 101: When querying data, the network resource estimation system reads a configured rule file.

Specifically, when querying data, the estimation checking unit in the network resource estimation system notifies the data acquisition unit of the data type of the to-be-queried data and information of the network manager to which the data belongs, e.g., notifies the data acquisition unit of type data such as the number of configured timing sources to be queried, clock configuration natural vibration level, the value of a single board register, and single board information, as well as information of the network manager to which the data belongs. The data acquisition unit, after receiving the notification, reads the rule file configured in a corresponding network management adapter. The network management adapter corresponds to the network manager to which the data belongs.

Furthermore, the rule file has been set when a network management adapter is configured, comprises query rules of various kinds of data which have been set, and is stored in the network management adapter; the query rules are described in the subsequent related description of this step.

In the present disclosure, in order to implement an efficient data acquisition method, data acquisition principles are set as follows:
first, since querying data from a network management database is more efficient than querying data from network element equipment, the querying data from network element equipment should be avoided as far as possible. That is, for the data stored by both the network management database and the network element equipment, a synchronous module interface function in the network manager should be used for determining whether or not the data stored by both is the same; only when the data stored by both is not the same, the data is queried from the network element equipment; Otherwise, the data is queried from the network management database
second, for the data that has to be queried from the network element equipment, querying a bath of data from the same network element equipment once is more efficient than querying data from the same network element equipments for several times. Most of existing network managers are provided with upload comparison interfaces, therefore it is possible to query a batch of data from the network element equipment in a manner of uploading packets.

Based on the above-mentioned data acquisition principles, the rule file of the present disclosure can set query rules for various kinds of data to provide the data acquisition unit a basis for transmitting query commands, specifically comprising:
(1) whether or not this type of data needs to be queried from network element equipment;
(2) whether or not this type of data has to be queried from the network element equipment; wherein, the data that has to be queried from the network element equipment is only stored on the network element equipment side, or the data has high requirements for real time property;
(3) whether or not this type of data can be queried using an upload comparison interface, here, for the network managers that can be configured offline, the data can be queried using the upload comparison interface; and
(4) whether or not the contents of this type of data stored in a network management database and in the network element equipment are the same.

Step 102: The network resource estimation system sets a query command according to a query rule of to-be-queried data set in the rule file, and transmits the query command to a network manager.

Specifically, the data acquisition unit in the network resource estimation system sets a query command according to a query rule corresponding to to-be-queried data which is set in the read rule file, and transmits the query command to a network manager through a network management adapter corresponding to the network manager.

Here, the data acquisition unit will finally set three query commands with respect to the query rules described in Step 101, respectively including: to query from the network management database, to query through the upload comparison interface, and to query from the network element equipment through the query equipment command interface.

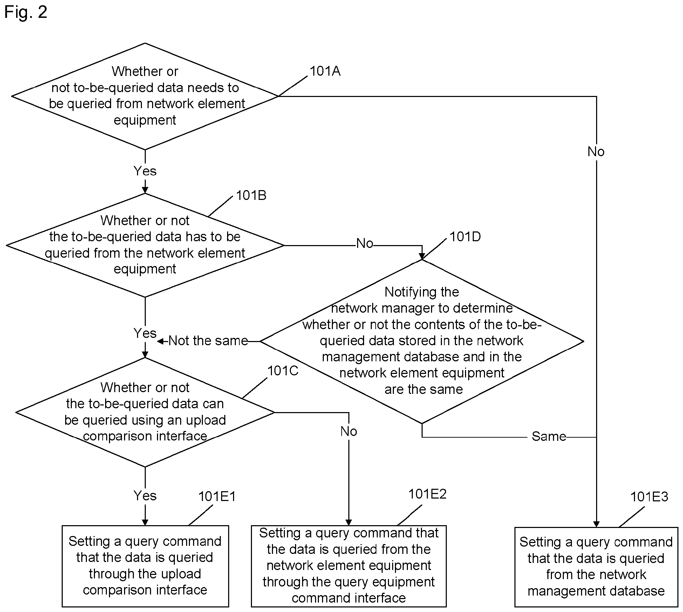

The process of setting a query command according to a query rule of to-be-queried data which is set in the rule file described in this step will be described in detail below, as shown in Fig. 2, the process is specifically as follows:
step 101A: determining whether or not the to-be-queried data needs to be queried from network element equipment, if so, executing step 101B; if not, executing step 101E3;
here, the determining is based on the query rule corresponding to the to-be-queried data which is set in the rule file;
step 101B: determining whether or not the to-be-queried data has to be queried from the network element equipment, if so, executing step 101C; if not, executing step 101D;
here, the determining is based on the query rule corresponding to the to-be-queried data which is set in the rule file.
step 101C: determining whether or not the to-be-queried data can be queried using the upload comparison interface, if so, executing step 101E1; if not, executing step 101E2;
here, the determining is based on the query rule corresponding to the to-be-queried data set in the rule file;
step 101D: notifying the network manager to determine whether or not the contents of the to-be-queried data stored in the network management database and in the network element equipment are the same, if they are the same, executing step 101E3; if they are different, executing step 101C;
this step specially is that: the data acquisition unit notifies a synchronous module interface existing in the network manager through the network management adapter to determine whether or not the contents of the to-be-queried data stored in a network management database and in the network element equipment are the same, and returns a determining result to the data acquisition unit through the network management adapter; when the data acquisition unit determines that the determining result shows they are the same, executing step 101E3; when it determines that the judgment result shows they are not the same, executing step 101C;
wherein, the synchronous module interface is an existing interface in an existing network manager, and the determining operation implemented belongs to an existing technology, therefore no detail is given here;
step 101E1: setting a query command that the data is queried through the upload comparison interface, and ending the current processing flow.
step 101E2: setting a query command that the data is queried from the network element equipment through the query equipment command interface and ending the current processing flow.
step 101E3: setting a query command that the data is queried from the network management database.
Step 103: The network manager queries the data through the interface of the network manager itself corresponding to the query command according to the received query command, and returns a query result to the network resource estimation system.

Specifically, the query command transmitted by the data acquisition unit is received by a command distribution interface existing in the network manager. The command distribution interface notifies a corresponding interface to perform data query operation according to different types of query commands, for example: when the query command is to query data through the upload comparison interface, it notifies the upload comparison interface to perform data query operation; when the query command is to query data from the network element equipment through the query equipment command interface, it notifies the query equipment command interface to perform data query operation; and when the query command is to query data from the network management database, it notifies the network management database query interface to perform data query operation.

After performing the query operations, each interface uploads a query result to the data acquisition unit through the network management adapter, corresponding to the network manager in the network resource estimation system and the command distribution interface, and then the data acquisition unit finally forwards the query result to the estimation checking unit.

Wherein, each interface in the network manager is an existing component in the network manager, and the data query operation implemented by each interface belongs to an existing technology, therefore no detail is given here.

Further, the network resource estimation system can analyze the received query data, and store an analysis result, and also can generate estimation report forms according to the analysis result.

Specifically, an estimation database and an estimation result generation unit can be set in the network resource estimation system; the estimation checking unit, after receiving a query result uploaded by the network manager, can analyze the query result, and store an analysis result in the estimation database; the estimation result generation unit can also generate estimation report forms according to the analysis result stored in the estimation database.

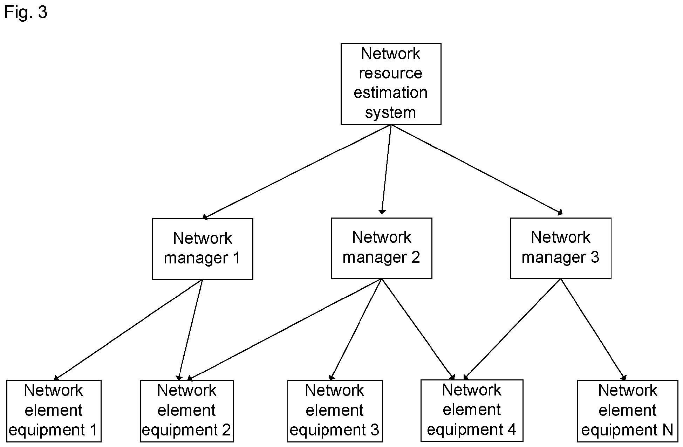

Fig. 3 is a structure diagram illustrating arrangement of a network resource estimation system in a multiple-network-manager environment according to the present disclosure, as shown in Fig. 3, the network resource estimation system is independent from any network manager, and not in direct interaction with any network element equipment.

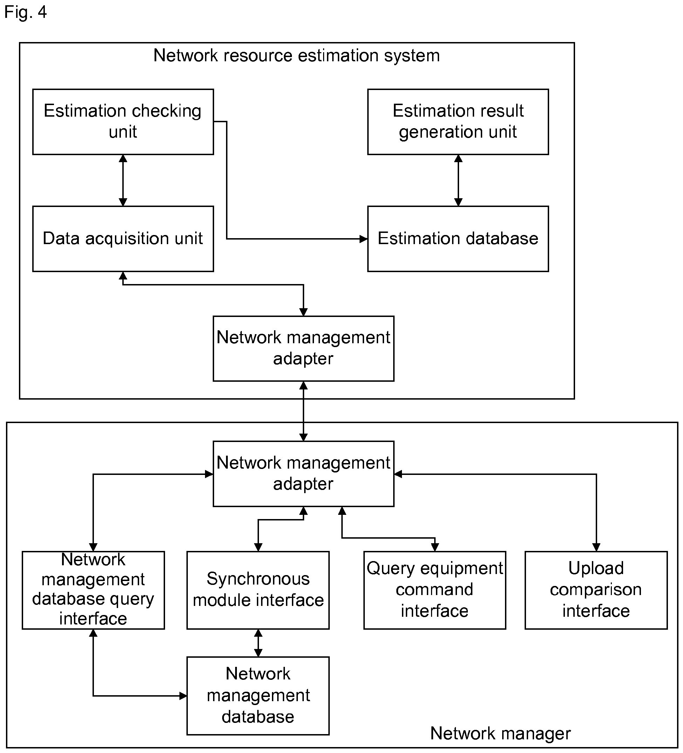

Fig. 4 is a structure diagram illustrating a data acquisition system in network resource estimation according to the present disclosure, as shown in Fig. 4, the system comprises a network resource estimation system and a network manager. In practical application, there are multiple network managers in the data acquisition system, each having the same structure. The structure diagram of only one network manager is shown in Fig. 4.

The network resource estimation system is configured to, when querying data, read a configured rule file, set a query command according to a query rule of to-be-queried data set in the rule file, transmit the query command to the network manager, and receives a query result returned by the network manager;
the network manager is configured to query the data through an interface of the network manager itself corresponding to the query command according to the query command transmitted by the network resource estimation system and return the query result to the network resource estimation system.

The network resource estimation system further comprises an estimation checking unit, a data acquisition unit and a network management adapter corresponding to the network manager; wherein,
the estimation checking unit is configured to, when the data is queried, notify the data acquisition unit of the data type of the to-be-queried data and information of the network manager to which the data belongs, and receive the query result uploaded by the data acquisition unit and returned by the network manager;
the data acquisition unit is configured to, after receiving the notification sent by the estimation checking unit, read the rule file configured in the network management adapter corresponding to the network manager to which the data belongs, set a query command according to a query rule of to-be-queried data set in the rule file, and transmit the query command to the network manager; and upload the query result forwarded by the network management adapter and returned by the network manager to the estimation checking unit;
the network management adapter is configured to store the configured rule file and perform communication between the data acquisition unit and the network manager;
accordingly, the network manager is further configured to query the data through the interface of the network manager itself corresponding to the query command according to the query command transmitted by the data acquisition unit, and return the query result to the estimation checking unit through the network management adapter and the data acquisition unit.

The estimation checking unit is also configured to analyze the query result after receiving the query result uploaded by the data acquisition unit.

The network resource estimation system also comprises an estimation database, which is configured to store an analysis result obtained after the estimation checking unit analyzes the query result.

The network resource estimation system further comprises an estimation result generation unit, which is configured to generate estimation report forms according to the analysis result stored in the estimation database.

In the present disclosure, the network manager includes three interfaces for querying new data, which are respectively an upload comparison interface, a query equipment command interface and a network management database query interface. All the three interfaces are interfaces existing in a network manager, and are used for performing corresponding data query operation according to a query command transmitted by the network resource estimation system. Specifically, a command distribution interface existing in the network manager receives the query command transmitted by the network resource estimation system; the command distribution interface notifies the above-mentioned three interfaces to perform data query operation according to different types of query commands.

The network manager also comprises a synchronous module interface, which is used for determining whether or not the contents of the to-be-queried data stored in the network management database and in the network element equipment are the same. This is an existing technology.

## Claims

1. A data acquisition method in network resource estimation, wherein the method comprises:
to query data, reading, by a network resource estimation system, a configured rule file (101), setting a query command according to a query rule of the to-be-queried data which is set in the rule file, and transmitting the query command to a network manager (102); and
querying, by the network manager, the to-be-queried data through an interface of the network manager itself corresponding to the query command according to the query command received, and returning a query result to the network resource estimation system (103),
wherein the network resource estimation system is configured with an estimation checking unit and a data acquisition unit required during data acquisition, as well as a network management adapter corresponding to the network manager; the network resource estimation system communicates with corresponding network managers through each network management adapter,
wherein the reading the configured rule file is:
notifying, by the estimation checking unit, the data acquisition unit of a data type of the to-be-queried data and information of the network manager to which the to-be-queried data belong after the data acquisition unit is notified, and
reading, by the data acquisition unit, the rule file configured in the network management adapter which is set in the network resource estimation system and corresponds to the network manager to which the to-be-queried data belong,
wherein the query rule comprises:
whether or not the to-be-queried data need to be queried from network element equipment; whether or not the to-be-queried data have to be queried from the network element equipment; whether or not the to-be-queried data can be queried using an upload comparison interface; and whether or not contents of the to-be-queried data stored in a network management database and in the network element equipment are the same,
wherein the setting a query command according to a query rule comprises:
determining whether or not the to-be-queried data need to be queried from the network element equipment (101A); if the to-be-queried data need to be queried from the network element equipment, then continuing to determine whether or not the to-be-queried data have to be queried from the network element equipment (101B); if the to-be-queried data need not to be queried from the network element equipment, then setting a query command to query data from the network management database (101E3);
if the to-be-queried data have to be queried from the network element equipment, then continuing to determine whether or not the to-be-queried data can be queried using the upload comparison interface (101C); if the to-be-queried data do not have to be queried from the network element equipment, then notifying the network manager to determine whether or not the contents of the to-be-queried data stored in the network management database and in the network element equipment are the same (101D), if they are the same, then setting the query command to query data from the network management database (101E3), if they are different, then continuing to determine whether or not the to-be-queried data can be queried using the upload comparison interface (101C); and
if the to-be-queried data can be queried using the upload comparison interface, then setting a query command to query data through the upload comparison interface (101E1); if the to-be-queried data cannot be queried using the upload comparison interface, then setting a query command to query data from the network element equipment through a query equipment command interface (101E2),
wherein the to-be-queried data that have to be queried from the network element equipment are only stored on the network element equipment side, or have high requirements for real time property,
wherein the to-be-queried data can be queried using the upload comparison interface if the network manager can be configured offline,
wherein the network manager comprises the upload comparison interface, the query equipment command interface, and a network management database query interface for performing a data query operation corresponding to the query command,
wherein the upload comparison interface is for querying a batch of data from the network element equipment in a manner of uploading packets,
wherein the query equipment command interface is for querying data from the network element equipment.

2. The data acquisition method in network resource estimation according to claim 1, wherein the querying, by the network manager, the to-be-queried data according to the query command comprises:
when the query command is to query data through the upload comparison interface, notifying the upload comparison interface to perform the data query operation;
when the query command is to query data from the network element equipment through the query equipment command interface, notifying the query equipment command interface to perform the data query operation; and
when the query command is to query data from the network management database, notifying the network management database query interface to perform the data query operation.

3. The data acquisition method in network resource estimation according to claim 1, further comprising:
analyzing, by the network resource estimation system, received queried data and storing an analysis result; and further generating estimation report forms according to the analysis result.

4. A data acquisition system in network resource estimation, **characterized in that** the system comprises a network resource estimation system and a network manager; wherein,
the network resource estimation system is configured to, when querying data, read a configured rule file, set a query command according to a query rule of the to-be-queried data which is set in the rule file, transmit the query command to the network manager, and receive a query result returned by the network manager;
the network manager is configured to query the to-be-queried data through an interface of the network manager itself corresponding to the query command according to the query command transmitted by the network resource estimation system, and return the query result to the network resource estimation system,
wherein the network resource estimation system is configured with an estimation checking unit and a data acquisition unit required during data acquisition, as well as a network management adapter corresponding to the network manager; the network resource estimation system communicates with corresponding network managers through each network management adapter,
wherein the estimation checking unit is configured to notify the data acquisition unit of a data type of the to-be-queried data and information of the network manager to which the to-be-queried data belong;
the data acquisition unit is configured to read the rule file configured in the network management adapter which is set in the network resource estimation system and corresponds to the network manager to which the to-be-queried data belong after the data acquisition unit is notified, wherein the query rule comprises:
whether or not the to-be-queried data need to be queried from network element equipment; whether or not the to-be-queried data have to be queried from the network element equipment; whether or not the to-be-queried data can be queried using an upload comparison interface; and whether or not contents of the to-be-queried data stored in a network management database and in the network element equipment are the same,
wherein the data acquisition unit is configured to
determine whether or not the to-be-queried data need to be queried from the network element equipment; if the to-be-queried data need to be queried from the network element equipment, then continue to determine whether or not the to-be-queried data have to be queried from the network element equipment; if the to-be-queried data need not to be queried from the network element equipment, then set a query command to query data from the network management database;
if the to-be-queried data have to be queried from the network element equipment, then continue to determine whether or not the to-be-queried data can be queried using the upload comparison interface; if the to-be-queried data do not have to be queried from the network element equipment, then notify the network manager to determine whether or not the contents of the to-be-queried data stored in the network management database and in the network element equipment are the same, if they are the same, then set the query command to query data from the network management database, if they are different, then continue to determine whether or not the to-be-queried data can be queried using the upload comparison interface; and
if the to-be-queried data can be queried using the upload comparison interface, then set a query command to query data through the upload comparison interface; if the to-be-queried data cannot be queried using the upload comparison interface, then set a query command to query data from the network element equipment through a query equipment command interface,
wherein the to-be-queried data that have to be queried from the network element equipment are only stored on the network element equipment side, or have high requirements for real time property,
wherein the to-be-queried data can be queried using the upload comparison interface if the network manager can be configured offline,
wherein the network manager comprises the upload comparison interface, the query equipment command interface, and a network management database query interface for performing a data query operation corresponding to the query command,
wherein the upload comparison interface is for querying a batch of data from the network element equipment in a manner of uploading packets,
wherein the query equipment command interface is for querying data from the network element equipment.

5. The data acquisition system in network resource estimation according to claim 4, wherein the estimation checking unit is further configured to analyze the query result after receiving the query result uploaded by the data acquisition unit;
the network resource estimation system further comprises an estimation database and an estimation result generation unit; wherein,
the estimation database is configured to store an analysis result obtained after the estimation checking unit analyzes the query result; and
the estimation result generation unit is configured to generate estimation report forms according to the analysis result stored in the estimation database.

6. The data acquisition system in network resource estimation according to claim 4, wherein the network manager is configured to:
when the query command is to query data through the upload comparison interface, notify the upload comparison interface to perform the data query operation;
when the query command is to query data from the network element equipment through the query equipment command interface, notify the query equipment command interface to perform the data query operation; and
when the query command is to query data from the network management database, notify the network management database query interface to perform the data query operation.

## Patentansprüche

1. Datenerfassungsverfahren in der Netzwerkressourcenschätzung, wobei das Verfahren Folgendes umfasst:
Abfragen von Daten, Lesen einer konfigurierten Regeldatei (101) durch ein Netzwerkressourcenschätzungssystem, Setzen eines Abfragebefehls gemäß einer Abfrageregel der abzufragenden Daten, welche in der Regeldatei festgelegt sind, und Übertragen des Abfragebefehls an einen Netzwerkmanager (102); und
Abfragen der abzufragenden Daten durch einen Netzwerkmanager über eine Schnittstelle des Netzwerkmanagers selbst entsprechend dem Abfragebefehl gemäß dem empfangenen Abfragebefehl, und Zurückgeben eines Abfrageergebnisses an das Netzwerkressourcenschätzungssystem (103),
wobei das Netzwerkressourcenschätzungssystem mit einer Schätzungsüberprüfungseinheit und einer während der Datenerfassung benötigten Datenerfassungseinheit sowie einem Netzwerk-managementadapter entsprechend dem Netzwerkmanager konfiguriert ist; wobei das Netzwerkressourcenschätzungssystem mit den entsprechenden Netzwerkmanagern durch jeden Netzwerk-managementadapter kommuniziert,
wobei das Lesen der konfigurierten Regeldatei aus Folgendem besteht:
Benachrichtigen der Datenerfassungseinheit über den Datentyp der abzufragenden Daten durch die Schätzungsüberprüfungseinheit und, nachdem die Datenerfassungseinheit benachrichtigt wurde, Informieren des Netzwerkmanagers, zu dem die abzufragenden Daten gehören, und
Lesen der Regeldatei, die in einem Netzwerkmanagementadapter konfiguriert ist, der in einem Netzwerkressourcenschätzungssystem entsprechend dem Netzwerkmanager eingestellt ist, zu dem die abzufragenden Daten gehören, durch die Datenerfassungseinheit,
wobei die Abfrageregel Folgendes umfasst:
ob die abzufragenden Daten von einem Netzwerkelementgerät abgefragt werden müssen oder nicht; ob die abzufragenden Daten von dem Netzwerkelementgerät abgefragt werden müssen oder nicht; ob die abzufragenden Daten über eine Upload-Vergleichsschnittstelle abgefragt werden können oder nicht; und ob Inhalte der abzufragenden Daten, die in einer Netzwerkmanagementdatenbank und in dem Netzwerkelementgerät gespeichert sind, gleich sind oder nicht,
wobei das Setzen eines Abfragebefehls gemäß einer Abfrageregel Folgendes umfasst:
Bestimmen, ob die abzufragenden Daten von dem Netzwerkelementgerät (101A) abgefragt werden müssen oder nicht; wenn die abzufragenden Daten von dem Netzwerkelementgerät abgefragt werden müssen, dann weiterhin Bestimmen, ob die abzufragenden Daten von dem Netzwerkelementgerät (101B) abgefragt werden müssen oder nicht; wenn die abzufragenden Daten nicht von dem Netzwerkelementgerät abgefragt werden müssen, dann Setzen eines Abfragebefehls, um Daten von der Netzwerkmanagementdatenbank (101E3) abzufragen;
wenn die abzufragenden Daten von dem Netzwerkelementgerät abgefragt werden müssen, weiterhin Bestimmen, ob die abzufragenden Daten über die Upload-Vergleichsschnittstelle (101C) abgefragt werden können oder nicht; wenn die abzufragenden Daten nicht von dem Netzwerkelementgerät abgefragt werden müssen, Benachrichtigen des Netzwerkmanagers, um zu bestimmen, ob die Inhalte der abzufragenden Daten, die in der Netzwerkmanagementdatenbank und in dem Netzwerkelementgerät gespeichert sind, gleich (101D) sind oder nicht, wenn sie gleich sind, dann Setzen des Abfragebefehls, um Daten von der Netzwerkmanagementdatenbank (101E3) abzufragen, wenn sie unterschiedlich sind, dann weiterhin Bestimmen, ob die abzufragenden Daten über die Upload-Vergleichsschnittstelle (101C) abgefragt werden können oder nicht; und
wenn die abzufragenden Daten über die Upload-Vergleichsschnittstelle abgefragt werden können, dann Setzen eines Abfragebefehls, um die Daten über die Upload-Vergleichsschnittstelle (101E1) abzufragen; wenn die abzufragenden Daten nicht über die Upload-Vergleichsschnittstelle abgefragt werden können, dann Setzen eines Abfragebefehls, um die Daten von dem Netzwerkelementgerät über eine Abfragegerätbefehlsschnittstelle (101E2) abzufragen,
wobei die abzufragenden Daten, die von dem Netzwerkelementgeräte abgefragt werden müssen, nur auf der Netzwerkgeräteseite gespeichert werden oder hohe Anforderungen an Echtzeiteigenschaften haben,
wobei zu abzufragenden Daten über die Upload-Vergleichsschnittstelle abgefragt werden können, wenn der Netzwerkmanager offline konfiguriert werden kann,
wobei der Netzwerkmanager die Upload-Vergleichsschnittstelle umfasst sowie die Abfragegerätebefehlsschnittstelle und eine Netzwerkmanagementdatenbankabfrageschnittstelle, um eine Datenabfrage gemäß des Abfragebefehls durchzuführen,
wobei die Upload-Vergleichsschnittstelle dazu dient, einen Satz von Daten von der Netzwerkelementausrüstung durch Hochladen von-Paketen abzufragen,
wobei die Abfragegerätebefehlsschnittstelle zur Abfrage von Daten von dem Netzwerkelementgerät dient.

2. Datenerfassungsverfahren in der Netzwerkressourcenschätzung gemäß Anspruch 1,
wobei die Abfrage der abzufragenden Daten durch den Netzwerkmanager gemäß der Abfrage Folgendes umfasst:
wenn der Abfragebefehl lautet, Daten über die Upload-Vergleichsschnittstelle abzufragen, Benachrichtigen der Upload-Vergleichsschnittstelle, um die Datenabfrage durchzuführen;
wenn der Abfragebefehl lautet, Daten von dem Netzwerkelementgerät über die Abfragegerätebefehlsschnittstelle abzufragen, Benachrichtigen der Abfragegerätebefehlsschnittstelle, um die Datenabfrage durchzuführen; und
wenn der Abfragebefehl lautet, Daten von der Netzwerkmanagementdatenbank abzufragen, Benachrichtigen der Netzwerkmanagementdatenbankabfrageschnittstelle, um die Datenabfrage durchzuführen.

3. Datenerfassungsverfahren in der Netzwerkressourcenschätzung gemäß Anspruch 1, weiter umfassend:
Analysieren von empfangenen abgefragten Daten durch das Netzwerkressourcenschätzungssystem und Speichern eines Analyse-ergebnisses; und ferner Erzeugen von Schätzungsberichtsformularen gemäß dem Analyseergebnis.

4. Datenerfassungssystem in der Netzwerkressourcenschätzung, **dadurch gekennzeichnet, dass** das System ein Netzwerkressourcenschätzungssystem und einen Netzwerkmanager umfasst; wobei
das Netzwerkressourcenschätzsystem dazu ausgebildet ist, beim Abfragen von Daten eine konfigurierte Regeldatei zu lesen, einen Abfragebefehl gemäß einer Abfrageregel von abzufragenden Daten festzulegen, die in der Regeldatei festgelegt sind, den Abfragebefehl an den Netzwerkmanager zu senden und ein vom Netzwerkmanager zurückgegebenes Abfrageergebnis zu empfangen;
der Netzwerkmanager dazu ausgebildet ist, die abzufragenden Daten über eine Schnittstelle des Netzwerkmanagers selbst abzufragen, die dem Abfragebefehl gemäß dem Abfragebefehl entspricht, der durch das Netzwerkressourcenschätzungssystem übertragen wurde, und das Abfrageergebnis an das Netzwerkressourcenschätzungssystem zurückzugeben,
wobei das Netzwerkressourcenschätzungssystem mit einer Schätzungsprüfungseinheit konfiguriert ist, sowie mit einer während der Datenerfassung notwendigen Datenerfassungseinheit und einem Netzwerkmanagementadapter entsprechend dem Netzwerkmanager; wobei das Netzwerkressourcenschätzungssystem mit den entsprechenden Netzwerkmanagern durch jeden Netzwerkmanagementadapter kommuniziert,
wobei die Schätzungsüberprüfungseinheit konfiguriert ist, um die Datenerfassungseinheit über einen Datentyp der abzufragenden Daten zu benachrichtigen und den Netzwerkmanager zu informieren, zu dem die abzufragenden Daten gehören;
die Datenerfassungseinheit dazu ausgebildet ist, nachdem die Datenerfassungseinheit benachrichtigt wurde, die Regeldatei zu lesen, die in dem Netzwerkmanagementadapter konfiguriert ist, der in dem Netzwerkressourcenschätzungssystem angeordnet ist und dem Netzwerkmanager entspricht, zu dem die Daten gehören,
wobei die Abfrageregel Folgendes umfasst:
ob die abzufragenden Daten von einem Netzwerkelementgerät abgefragt werden müssen oder nicht; ob die abzufragenden Daten von dem Netzwerkelementgerät abgefragt werden müssen oder nicht; ob die abzufragenden Daten über eine Upload-Vergleichsschnittstelle abgefragt werden können oder nicht; und ob Inhalte der abzufragenden Daten, die in einer Netzwerkmanagementdatenbank und in dem Netzwerkelementgerät gespeichert sind, gleich sind oder nicht,
wobei die Datenerfassungseinheit für Folgendes konfiguriert ist:
Bestimmen, ob die abzufragenden Daten von dem Netzwerkelementgerät abgefragt werden müssen oder nicht; wenn die abzufragenden Daten von dem Netzwerkelementgerät abgefragt werden müssen, dann weiterhin Bestimmen, ob die abzufragenden Daten von dem Netzwerkelementgerät abgefragt werden müssen oder nicht; wenn die abzufragenden Daten nicht von dem Netzwerkelementgerät abgefragt werden müssen, dann Setzen eines Abfragebefehls, um Daten von der Netzwerkmanagementdatenbank abzufragen;
wenn die abzufragenden Daten von dem Netzwerkelementgerät abgefragt werden müssen, weiterhin Bestimmen, ob die abzufragenden Daten über die Upload-Vergleichsschnittstelle abgefragt werden können oder nicht; wenn die abzufragenden Daten nicht von dem Netzwerkelementgerät abgefragt werden müssen, Benachrichtigen des Netzwerkmanagers, um zu bestimmen, ob die Inhalte der abzufragenden Daten, die in der Netzwerkmanagementdatenbank und in dem Netzwerkelementgerät gespeichert sind, gleich sind oder nicht, wenn sie gleich sind, dann Setzen des Abfragebefehls, um Daten von der Netzwerkmanagementdatenbank abzufragen, wenn sie unterschiedlich sind, dann weiterhin Bestimmen, ob die abzufragenden Daten über die Upload-Vergleichsschnittstelle abgefragt werden können oder nicht; und
wenn die abzufragenden Daten über die Upload-Vergleichsschnittstelle abgefragt werden können, dann Setzen eines Abfragebefehls, um die Daten über die Upload-Vergleichsschnittstelle abzufragen; wenn die abzufragenden Daten nicht über die Upload-Vergleichsschnittstelle abgefragt werden können, dann Setzen eines Abfragebefehls, um die Daten von dem Netzwerkelementgerät über eine Abfragegerätebefehlsschnittstelle abzufragen,
wobei die abzufragenden Daten, die von dem Netzwerkelementgerät abgefragt werden müssen, nur auf der Netzwerkgeräteseite gespeichert werden oder hohe Anforderungen an Echtzeiteigenschaften haben;
wobei zu abzufragenden Daten über die Upload-Vergleichsschnittstelle abgefragt werden können, wenn der Netzwerkmanager offline konfiguriert werden kann,
wobei der Netzwerkmanager die Upload-Vergleichsschnittstelle umfasst sowie die Abfragegerätebefehlsschnittstelle und eine Netzwerkmanagementdatenbankabfrageschnittstelle, um eine Datenabfrage gemäß des Abfragebefehls durchzuführen,
wobei die Upload-Vergleichsschnittstelle dazu dient, einen Satz von Daten von dem Netzwerkelementgerät durch Hochladen von Paketen abzufragen,
wobei die Abfragegerätebefehlsschnittstelle zur Abfrage von Daten von dem Netzwerkelementgerät dient.

5. Datenerfassungssystem in der Netzwerkressourcenschätzung gemäß Anspruch 4,
wobei die Schätzungsprüfungseinheit ferner dazu ausgebildet ist, das Abfrageergebnis nach dem Empfang des von der Datenerfassungseinheit hochgeladenen Abfrageergebnisses zu analysieren;
das Netzwerkressourcenschätzungssystem ferner eine Schätzungsdatenbank und eine Schätzungsergebniserzeugungseinheit umfasst; wobei
die Schätzungsdatenbank dazu ausgebildet ist, um ein Analyseergebnis zu speichern, das erhalten wird, nachdem die Schätzungsüberprüfungseinheit das Abfrageergebnis analysiert hat; und
die Schätzungsergebniserzeugungseinheit dazu konfiguriert ist, Schätzungsberichtsformulare gemäß dem in der Schätzungsdatenbank gespeicherten Analyseergebnis zu erzeugen.

6. Datenerfassungssystem bei der Netzwerkressourcenschätzung nach Anspruch 4,
wobei der Netzwerkmanager zu Folgendem ausgebildet ist:
wenn der Abfragebefehl lautet, Daten über die Upload-Vergleichsschnittstelle abzufragen, Benachrichtigen der Upload-Vergleichsschnittstelle, um die Datenabfrage durchzuführen;
wenn der Abfragebefehl lautet, Daten von dem Netzwerkelementgerät über die Abfragegerätebefehlsschnittstelle abzufragen, Benachrichtigen der Abfragegerätebefehlsschnittstelle, um die Datenabfrage durchzuführen; und
wenn der Abfragebefehl lautet, Daten von der Netzwerkmanagementdatenbank abzufragen, Benachrichtigen der Netzwerkmanagementdatenbankabfrageschnittstelle, um die Datenabfrage durchzuführen.

## Revendications

1. Procédé d'acquisition de données dans une estimation de ressources de réseau, dans lequel le procédé comprend :
pour interroger des données, la lecture, par un système d'estimation de ressources de réseau, d'un fichier de règle configuré (101), le réglage d'une commande d'interrogation en fonction d'une règle d'interrogation des données à interroger qui est réglée dans le fichier de règle, et la transmission de la commande d'interrogation à un gestionnaire de réseau (102) ; et
l'interrogation, par le gestionnaire de réseau, des données à interroger par l'intermédiaire d'une interface du gestionnaire de réseau proprement dit correspondant à la commande d'interrogation en fonction de la commande d'interrogation reçue, et le retour d'un résultat d'interrogation au système d'estimation de ressources de réseau (103),
dans lequel le système d'estimation de ressources de réseau est configuré avec une unité de contrôle d'estimation et une unité d'acquisition de données nécessaires au cours d'une acquisition de données, ainsi qu'un adaptateur de gestion de réseau correspondant au gestionnaire de réseau ; le système d'estimation de ressources de réseau communique avec des gestionnaires de réseau correspondants par l'intermédiaire de chaque adaptateur de gestion de réseau,
dans lequel la lecture du fichier de règle configuré est :
la notification, par l'unité de contrôle d'estimation, à l'unité d'acquisition de données, d'un type de données des données à interroger et d'informations du gestionnaire de réseau auquel les données à interroger appartiennent après la notification de l'unité d'acquisition de données, et
la lecture, par l'unité d'acquisition de données, du fichier de règle configuré dans l'adaptateur de gestion de réseau qui est réglé dans le système d'estimation de ressources de réseau et qui correspond au gestionnaire de réseau auquel les données à interroger appartiennent,
dans lequel la règle d'interrogation comprend :
si les données à interroger ont besoin ou non d'être interrogées à partir de l'équipement d'élément de réseau ; si les données à interroger doivent ou non être interrogées à partir de l'équipement d'élément de réseau ; si les données à interroger peuvent ou non être interrogées en utilisant une interface de comparaison de chargement ; et si des contenus des données à interroger mémorisés dans une base de données de gestion de réseau et dans l'équipement d'élément de réseau sont ou non identiques,
dans lequel le réglage d'une commande d'interrogation en fonction d'une règle d'interrogation comprend :
la détermination si les données à interroger ont besoin ou non d'être interrogées à partir de l'équipement d'élément de réseau (101A) ; si les données à interroger ont besoin d'être interrogées à partir de l'équipement d'élément de réseau, alors la continuation pour déterminer si les données à interroger doivent ou non être interrogées à partir de l'équipement d'élément de réseau (101B) ; si les données à interroger n'ont pas besoin d'être interrogées à partir de l'équipement d'élément de réseau, alors le réglage d'une commande d'interrogation pour interroger des données à partir de la base de données de gestion de réseau (101E3) ;
si les données à interroger doivent être interrogées à partir de l'équipement d'élément de réseau, alors la continuation pour déterminer si les données à interroger peuvent ou non être interrogées en utilisant l'interface de comparaison de chargement (101C) ; si les données à interroger ne doivent pas être interrogées à partir de l'équipement d'élément de réseau, alors la notification, au gestionnaire de réseau, de déterminer si les contenus des données à interroger mémorisés dans la base de données de gestion de réseau et dans l'équipement d'élément de réseau sont ou non identiques (101D); s'ils sont identiques, alors le réglage de la commande d'interrogation pour interroger des données à partir de la base de données de gestion de réseau (101E3) ; s'ils sont différents, alors la continuation pour déterminer si les données à interroger peuvent ou non être interrogées en utilisant l'interface de comparaison de chargement (101C) ; et
si les données à interroger peuvent être interrogées en utilisant l'interface de comparaison de chargement, alors le réglage d'une commande d'interrogation pour interroger des données par l'intermédiaire de l'interface de comparaison de chargement (101E1) ; si les données à interroger ne peuvent pas être interrogées en utilisant l'interface de comparaison de chargement, alors le réglage d'une commande d'interrogation pour interroger des données à partir de l'équipement d'élément de réseau par l'intermédiaire d'une interface de commande d'équipement d'interrogation (101E2),
dans lequel les données à interroger qui doivent être interrogées à partir de l'équipement d'élément de réseau ne sont mémorisées que sur le côté de l'équipement d'élément de réseau, ou ont des exigences élevées pour une propriété en temps réel,
dans lequel les données à interroger peuvent être interrogées en utilisant l'interface de comparaison de chargement si le gestionnaire de réseau peut être configuré hors ligne,
dans lequel le gestionnaire de réseau comprend l'interface de comparaison de chargement, l'interface de commande d'équipement d'interrogation, et une interface d'interrogation de base de données de gestion de réseau pour effectuer une opération d'interrogation de données correspondant à la commande d'interrogation,
dans lequel l'interface de comparaison de chargement est pour interroger un lot de données à partir de l'équipement d'élément de réseau d'une manière consistant à charger des paquets,
dans lequel l'interface de commande d'équipement d'interrogation est pour interroger des données à partir de l'équipement d'élément de réseau.

2. Procédé d'acquisition de données dans une estimation de ressources de réseau selon la revendication 1, dans lequel l'interrogation, par le gestionnaire de réseau, des données à interroger en fonction de la commande d'interrogation comprend :
lorsque la commande d'interrogation est pour interroger des données par l'intermédiaire de l'interface de comparaison de chargement, la notification à l'interface de comparaison de chargement d'effectuer l'opération d'interrogation de données ;
lorsque la commande d'interrogation est pour interroger des données à partir de l'équipement d'élément de réseau par l'intermédiaire de l'interface de commande d'équipement d'interrogation, la notification à l'interface de commande d'équipement d'interrogation d'effectuer l'opération d'interrogation de données ; et
lorsque la commande d'interrogation est pour interroger des données à partir de la base de données de gestion de réseau, la notification à l'interface d'interrogation de base de données de gestion de réseau d'effectuer l'opération d'interrogation de données.

3. Procédé d'acquisition de données dans une estimation de ressources de réseau selon la revendication 1, comprenant en outre :
l'analyse, par le système d'estimation de ressources de réseau, de données interrogées reçues et la mémorisation d'un résultat d'analyse ; et en outre la génération de formulaires de rapport d'estimation en fonction du résultat d'analyse.

4. Système d'acquisition de données dans une estimation de ressources de réseau, **caractérisé en ce que** le système comprend un système d'estimation de ressources de réseau et un gestionnaire de réseau, dans lequel
le système d'estimation de ressources de réseau est configuré pour effectuer, lors de l'interrogation de données, la lecture d'un fichier de règle configuré, le réglage d'une commande d'interrogation en fonction d'une règle d'interrogation des données à interroger qui est réglée dans le fichier de règle, la transmission de la commande d'interrogation au gestionnaire de réseau, et la réception d'un résultat d'interrogation retourné par le gestionnaire de réseau ;
le gestionnaire de réseau est configuré pour effectuer l'interrogation des données à interroger par l'intermédiaire d'une interface du gestionnaire de réseau proprement dit correspondant à la commande d'interrogation en fonction de la commande d'interrogation transmise par le système d'estimation de ressources de réseau, et le retour du résultat d'interrogation au système d'estimation de ressources de réseau,
dans lequel le système d'estimation de ressources de réseau est configuré avec une unité de contrôle d'estimation et une unité d'acquisition de données nécessaires au cours d'une acquisition de données, ainsi qu'un adaptateur de gestion de réseau correspondant au gestionnaire de réseau ; le système d'estimation de ressources de réseau communique avec des gestionnaires de réseau correspondants par l'intermédiaire de chaque adaptateur de gestion de réseau,
dans lequel l'unité de contrôle d'estimation est configurée pour effectuer la notification, à l'unité d'acquisition de données, d'un type de données des données à interroger et d'informations du gestionnaire de réseau auquel les données à interroger appartiennent ;
l'unité d'acquisition de données est configurée pour effectuer la lecture du fichier de règle configuré dans l'adaptateur de gestion de réseau qui est réglé dans le système d'estimation de ressources de réseau et qui correspond au gestionnaire de réseau auquel les données à interroger appartiennent après la notification de l'unité d'acquisition de données,
dans lequel la règle d'interrogation comprend :
si les données à interroger ont besoin ou non d'être interrogées à partir de l'équipement d'élément de réseau ; si les données à interroger doivent ou non être interrogées à partir de l'équipement d'élément de réseau ; si les données à interroger peuvent ou non être interrogées en utilisant une interface de comparaison de chargement ; et si des contenus des données à interroger mémorisés dans une base de données de gestion de réseau et dans l'équipement d'élément de réseau sont ou non identiques,
dans lequel l'unité d'acquisition de données est configurée pour effectuer :
la détermination si les données à interroger ont besoin ou non d'être interrogées à partir de l'équipement d'élément de réseau ; si les données à interroger ont besoin d'être interrogées à partir de l'équipement d'élément de réseau, alors la continuation pour déterminer si les données à interroger doivent ou non être interrogées à partir de l'équipement d'élément de réseau ; si les données à interroger n'ont pas besoin d'être interrogées à partir de l'équipement d'élément de réseau, alors le réglage d'une commande d'interrogation pour interroger des données à partir de la base de données de gestion de réseau ;
si les données à interroger doivent être interrogées à partir de l'équipement d'élément de réseau, alors la continuation pour déterminer si les données à interroger peuvent ou non être interrogées en utilisant l'interface de comparaison de chargement; si les données à interroger ne doivent pas être interrogées à partir de l'équipement d'élément de réseau, alors la notification, au gestionnaire de réseau, de déterminer si les contenus des données à interroger mémorisés dans la base de données de gestion de réseau et dans l'équipement d'élément de réseau sont ou non identiques ; s'ils sont identiques, alors le réglage de la commande d'interrogation pour interroger des données à partir de la base de données de gestion de réseau ; s'ils sont différents, alors la continuation pour déterminer si les données à interroger peuvent ou non être interrogées en utilisant l'interface de comparaison de chargement ; et
si les données à interroger peuvent être interrogées en utilisant l'interface de comparaison de chargement, alors le réglage d'une commande d'interrogation pour interroger des données par l'intermédiaire de l'interface de comparaison de chargement; si les données à interroger ne peuvent pas être interrogées en utilisant l'interface de comparaison de chargement, alors le réglage d'une commande d'interrogation pour interroger des données à partir de l'équipement d'élément de réseau par l'intermédiaire d'une interface de commande d'équipement d'interrogation,
dans lequel les données à interroger qui doivent être interrogées à partir de l'équipement d'élément de réseau ne sont mémorisées que sur le côté de l'équipement d'élément de réseau, ou ont des exigences élevées pour une propriété en temps réel,
dans lequel les données à interroger peuvent être interrogées en utilisant l'interface de comparaison de chargement si le gestionnaire de réseau peut être configuré hors ligne,
dans lequel le gestionnaire de réseau comprend l'interface de comparaison de chargement, l'interface de commande d'équipement d'interrogation, et une interface d'interrogation de base de données de gestion de réseau pour effectuer une opération d'interrogation de données correspondant à la commande d'interrogation,
dans lequel l'interface de comparaison de chargement est pour interroger un lot de données à partir de l'équipement d'élément de réseau d'une manière consistant à charger des paquets,
dans lequel l'interface de commande d'équipement d'interrogation est pour interroger des données à partir de l'équipement d'élément de réseau.

5. Système d'acquisition de données dans une estimation de ressources de réseau selon la revendication 4, dans lequel l'unité de contrôle d'estimation est en outre configurée pour effectuer l'analyse du résultat d'interrogation après la réception du résultat d'interrogation chargé par l'unité d'acquisition de données ;
le système d'estimation de ressources de réseau comprend en outre une base de données d'estimation et une unité de génération de résultat d'estimation ; dans lequel
la base de données d'estimation est configurée pour effectuer la mémorisation d'un résultat d'analyse obtenu après l'analyse du résultat d'interrogation par l'unité de contrôle d'estimation ; et
l'unité de génération de résultat d'estimation est configurée pour effectuer la génération de formulaires de rapport d'estimation en fonction du résultat d'analyse mémorisé dans la base de données d'estimation.

6. Système d'acquisition de données dans une estimation de ressources de réseau selon la revendication 4, dans lequel le gestionnaire de réseau est configuré pour effectuer :
lorsque la commande d'interrogation est pour interroger des données par l'intermédiaire de l'interface de comparaison de chargement, la notification à l'interface de comparaison de chargement d'effectuer l'opération d'interrogation de données ;
lorsque la commande d'interrogation est pour interroger des données à partir de l'équipement d'élément de réseau par l'intermédiaire de l'interface de commande d'équipement d'interrogation, la notification à l'interface de commande d'équipement d'interrogation d'effectuer l'opération d'interrogation de données ; et
lorsque la commande d'interrogation est pour interroger des données à partir de la base de données de gestion de réseau, la notification à l'interface d'interrogation de base de données de gestion de réseau d'effectuer l'opération d'interrogation de données.
